Europäisches Patentamt

European Patent Office

Office européen des brevets

(19)

(11) Veröffentlichungsnummer: **0 053 312**
**A1**

(12) **EUROPÄISCHE PATENTANMELDUNG**

(21) Anmeldenummer: 81109687.4

(51) Int. Cl.³: **G 03 B 17/26**

(22) Anmeldetag: 14.11.81

(30) Priorität: 28.11.80 DE 3044808

(43) Veröffentlichungstag der Anmeldung: 09.06.82
Patentblatt 82/23

(84) Benannte Vertragsstaaten: **CH DE FR GB IT LI**

(71) Anmelder: **AGFA-GEVAERT Aktiengesellschaft,
D-5090 Leverkusen 1 (DE)**

(72) Erfinder: **Tabel, Johannes, Auf dem Stein 16,
D-5090 Leverkusen 1 (DE)**

(54) Kassette mit Spule und einem Befestigungsband für einen Materialstreifen.

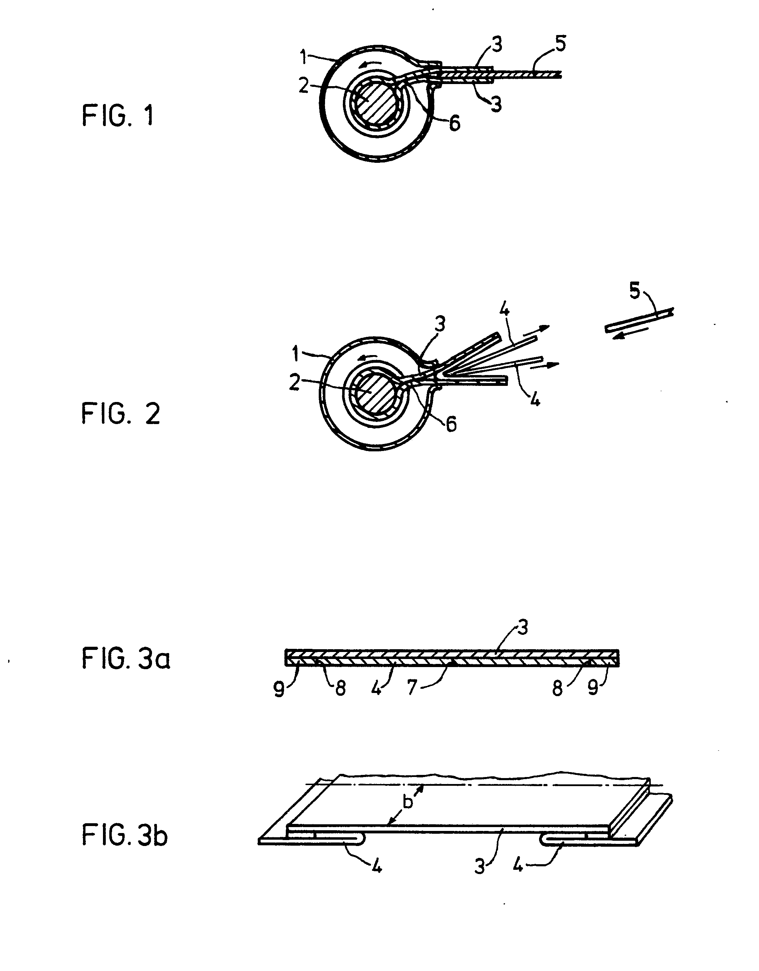

(57) Eine Kassette (1) mit Spule (2) und einem Befestigungsband (3) zur Befestigung eines Materialstreifens (5) an der
Spule (2) ist so beschaffen, daß das Band (3) auf oder an
dem Holm der Spule (2) und in einem Bereich (6) ein Stück
auf sich selbst befestigt ist und freie, nichtklebende Enden
oder freie klebende mit einem vor dem Zusammenkleben
der Bänder (3) schützenden Material abgedeckte Enden
besitzt und die freien Enden des Bandes (3) zur Aufnahme
und Befestigung des Materialstreifens (5) zwischen den
Bandenden aus der Öffnung der Kassette (1) herausgeführt
sind (Fig. 1).

0053312

AGFA-GEVAERT
AKTIENGESELLSCHAFT          5090 Leverkusen, Bayerwerk
Patentabteilung            HRS/kl-c


Kassette mit Spule und einem Befestigungsband für einen
Materialstreifen

Die Erfindung betrifft eine Kassette mit Spule und einem Befestigungsband zur Befestigung eines Materialstreifens an der Spule, insbesondere eine Kleinbildfilmkassette mit einer Kleinbildspule und einem Kleinbildfilm.

Es ist bekannt, Spulen auf die verschiedensten Arten mit Materialstreifen zum Aufwickeln der Streifen auf die Spulen zu verbinden. Derartige Lösungen sind das mehrfache Umschlingen des Spulenholmes, das Annieten des Streifens an den Kern, das Klemmen des Streifens zwischen den Flanschen der Spule oder das Einhaken des Streifens am oder in einem Schlitz im Spulenkern sowie das Ankleben des Materialstreifens am Spulenkern. Der Gegenstand der Erfindung befaßt sich mit dem Befestigen eines Materialstreifens an eine Spule, insbesondere eines Filmstreifens an eine Filmspule in einer Filmkassette.


AG 1753

Aus der US-Patentschrift 2 951 656 ist bekannt, das Ende eines Filmstreifens mit einem speziellen Klebestreifen so an einer Filmspule zu befestigen, daß dieser sich beim Abwickeln und Wiederaufwickeln nicht von der Spule löst. Als spezieller Klebestreifen wird ein beidseitig klebendes Band verwendet, welches rund um den Holm der Spule gelegt und mit seinen Enden auf sich selbst verklebt wird. Um das Klebeband wird der Filmstreifen ebenfalls rund um den Holm gelegt und über dem doppelt liegenden Klebeband noch ein Stück auf sich selbst verklebt.

Diese Befestigungsart hat zwar den Vorteil eine sehr gute Verbindung zwischen Spulenholm und Filmband zu gewährleisten, aber den Nachteil, daß mehr wertvolles Filmband benötigt wird und daß die Klebestelle auf dem Spulenholm erheblich aufträgt, so daß beim Aufwickeln des Filmstreifens ein unrunder Wickel entsteht und bei hochempfindlichen Filmen Abdrücke auf den über der Klebestelle liegenden Windungen des Filmes durch Drucksensiblisierungen entstehen können. Ein weiterer erheblicher Nachteil dieser Befestigungsart besteht darin, daß der Filmstreifen stets außerhalb der Kassette und im Dunkeln an die Spule angebracht werden muß und dann Filmstreifen und Spule zusammen in die Kassette eingeführt und die Kassette geschlossen werden muß.

Der Erfindung liegt daher die Aufgabe zugrunde eine

AG 1753

Befestigung der eingangs genannten Art zu schaffen, mit der es auf sichere und einfache Weise möglich ist, einen Materialstreifen an einer Spule, die sich in einer geschlossenen Kassette befindet, zu befestigen.

Ausgehend von einer Befestigung der eingangs genannten Art, ist diese Aufgabe erfindungsgemäß dadurch gelöst, daß das Band auf oder an dem Holm der Spule und ein Stück auf sich selbst befestigt ist und freie, nichtklebende Enden oder freie klebende und mit einem vor dem Zusammenkleben der Bänder schützenden Material abgedeckte Enden besitzt und die freien Enden des Bandes zur Aufnahme und Befestigung des Materialstreifens zwischen den Bandenden aus der Öffnung der Kassette herausgeführt sind.

Überraschenderweise bietet diese erfindungsgemäße Befestigung eines Materialstreifens an einer Spule erhebliche Vorteile gegenüber den bisher bekannten Befestigungsarten.

Das Befestigungsband kann vor der Montage der Kassette bereits an die Spule angebracht werden und in die Kassette eingelegt und die Kassette verschlossen werden, was bei der Herstellung von Filmkassetten den Vorteil bringt, daß diese Arbeitsgänge im Hellen ausgeführt werden können. Durch den durch das Band gebildeten Vorspann ist es möglich, kürzere Filmlängen zu verwen-

AG 1753

den und teueres Filmmaterial einzusparen. Das Befestigungsband, welches beidseitig auf den Materialstreifen aufgebracht wird, erlaubt eine abolut sichere Befestigung des Materialstreifens an der Spule, so daß ein Lösen weder beim Vorspulen oder Zurückspulen erfolgen kann. Auch trägt das Befestigungsband nicht wesentlich auf, so daß keine Abdrücke auf dem Materialstreifen entstehen, insbesondere wenn der Spulenholm im Bereich des aufgebrachten Befestigungsbandes einen geringeren Durchmesser besitzt als an den, den Materialstreifen tragenden, Rändern des Holmes.

Eine vorteilhafte Ausführungsform zeichnet sich dadurch aus, daß das Band ein Klebeband mit einem vor dem Zusammenkleben schützenden Material ist und daß das Klebeband um den Spulenholm herum und ein Stück auf sich selbst verklebt ist, wobei das hierbei frei werdende schützende Material in der Mitte des Klebebandes getrennt ist und von der Mitte aus nach beiden Seiten um 180° umgefaltet ist und zum Abziehen des noch schützenden Materials an den Enden des Klebebandes mit den Enden aus der Öffnung der Kassette mit herausgeführt ist.

Auf diese Weise kann, nach Einführen des Materialstreifens zwischen die freien Enden des Klebebandes, das vor dem Verkleben schützende Material leicht erfaßt und durch Abziehen des schützenden Materials können

AG 1753

die Klebeflächen freigesetzt werden. Beim Einspulen des Materialstreifens in die Kassette werden die Klebeflächen der Klebebandenden durch den Einführschlitz, das sogenannte Kassettenmaul bei Filmkassetten, an den Materialstreifen angedrückt und mit diesem verklebt.

Ebenso vorteilhaft ist eine Ausführung des Befestigungsbandes, die sich dadurch auszeichnet, daß als Befestigungsband zwei Klebebänder vorgesehen sind, die von zwei gegenüberliegenden Seiten an den Spulenholm und ein Stück auf sich selbst geklebt sind und das vor dem Zusammenkleben schützende Material um 180° umgefaltet und mit den Enden der Klebebänder zum Abziehen des noch schützenden Materials mit den beiden Enden aus der Öffnung der Kassette herausgeführt ist.

Statt eines einzigen Befestigungsbandes, was z.B. ein Haftetikett als Klebeband mit einer siliconisierten Abdeckfolie als vor dem Zusammenkleben schützendes Material sein kann, ist es oft vorteilhaft, zwei Haftetiketten auf den Spulenholm aufzukleben und ein Stück auf sich zusammenzukleben, bevor die noch mit Abdeckfolie geschützten Enden aus der Öffnung der Kassette herausgeführt werden.

Soll eine Kassette mehrmals mit einem Materialband gefüllt werden, so müssen die Klebestellen zwischen dem Befestigungsband und dem benutzten Materialstreifen gelöst werden. Hierzu ist es vorteilhaft, wenn an

AG 1753

den Enden der Klebestreifen ein Einschnitt durch das schützende Material parallel zur Spulenachse vorgesehen ist und die äußersten Enden der Klebestreifen vor dem Verkleben mit dem Materialband geschützt sind.

Mit den nicht an den Materialstreifen anklebenden Enden des Befestigungsbandes kann eine Haftverklebung aufgezogen werden und ein anderer Materialstreifen angeklebt werden. Bei guten Haftklebern läßt sich dieser Vorgang leicht drei bis fünf mal durchführen.

Eine sehr vorteilhafte Weiterbildung der Erfindung zeichnet sich dadurch aus, daß das Befestigungsband ein Klebeband ist und mit einem unter normalen Bedingungen inaktiven Kleber versehen ist und zum Kleben an dem Spulenholm, auf sich selbst und auf dem Materialstreifen durch Hitze aktivierbar ist.

Klebebänder mit durch Hitze aktivierbaren Klebern wie Schmelzklebern, sind seit langem bekannt. Bei der Verwendung derartiger Klebebänder als Befestigungsband werden vorteilhafterweise keine vor Verklebung schützende Materialien benötigt. Der Materialstreifen wird zwischen die beiden Enden des an der Spule und auf sich selbst klebenden Klebebandes, die aus der Öffnung der Kassette herausgeführt sind, geschoben und unter Hitze- und Druckanwendung mit dem Befestigungsband verklebt.

AG 1753

Ebenso vorteilhaft ist eine Weiterbildung der Erfindung, die sich dadurch auszeichnet, daß das Band aus einem Material besteht oder mit einem Material beschichtet ist, welches mit der Spule, auf sicht selbst und den beiden Seiten des Materialstreifens mit Hitze oder Ultraschallenergie verschweißbar ist.

Derartige Kunststoffe oder mit Kunststoff beschichtete Materialien sind in einer großen Zahl bekannt und lassen sich oft durch Hitzeanwendung oder besser durch Ultraschallenergie mit anderen Kunststoffen oder Materialien verschweißen, so daß äußerst feste Verbindungen entstehen.

Es ist natürlich auch möglich ein kombiniertes Befestigungsband zu verwenden, z.B. indem das Band im Bereich der Verklebung mit dem Spulenholm und auf sich selbst ein Haftklebeband ist und an seinen festen Enden mit einem inaktiven Kleber zum Hitzeverkleben oder mit einer Beschichtung versehen ist, die mit dem Materialstreifen verschweißbar ist.

Eine besonders vorteilhafte Ausführungsform zeichnet sich dadurch aus, daß der Spulenholm in seinem mittleren Bereich einen geringeren Durchmesser besitzt und in diesem Bereich als Befestigungsbänder zwei dünne flexible Laschen angespritzt sind, die in ihrer Länge so bemessen sind, daß sie aus der Öffnung der Kassette herausragen und nach dem Dazwischenschieben

AG 1753

des Materialstreifens mit diesem verschweißbar sind.

Der besondere Vorteil dieser Ausführungsform liegt darin, daß kein zusätzliches Befestigungsband benötigt und an der Spule angebracht werden muß. Die beiden als Bänder dienenden Laschen können vielmehr gleich bei der Herstellung der Spule an diese angespritzt werden. Allerdings muß dann ein flexibler, leicht biegbarer Kunststoff zur Herstellung der gesamten Spule verwendet werden. Die Laschen als Befestigungsband können an der Spule als eine Lasche ausgebildet sein und sich dann kurz vor oder hinter der Öffnung der Kassette in zwei Laschen aufspalten, zwischen die der Materialstreifen eingeführt und mit den Laschen verschweißt wird.

Für einen Materialstreifen, der sich schlecht durch Kleben oder Verschweißen mit einem Befestigungsband verbinden läßt wurde eine Lösung gefunden, die darin besteht, daß der an den Bandenden zu befestigende Materialstreifen an seinem Ende mit Löchern versehen ist, durch die die Bandenden hindurch miteinander verklebbar oder verschweißbar sind.

Eine Spule mit Laschen, wie sie oben beschrieben wurde, kann vorteilhafterweise auch so ausgebildet sein, daß eine mehrmalige Benutzung der Kassette für verschiedene Materialstreifen möglich ist, indem die flexiblen Laschenenden mit druckknopfartigen Ver-

AG 1753

schlüssen versehen sind, wobei die vorspringenden Teile an der einen Lasche so ausgebildet sind, daß sie durch Löcher im Materialband durchgreifen und in Löchern der anderen Lasche einrastbar sind.

Von besonderem Vorteil ist diese Ausführung auch dadurch, daß keine Hilfsmittel, wie Hitze- oder Ultraschallschweißenergie, erforderlich sind, um die Verbindung herzustellen, sondern ein leichter Druck genügt um ein Einrasten durchzuführen, was in einer einfachen Vorrichtung oder auch von Hand erfolgen kann.

Die beschriebenen Möglichkeiten eignen sich für jede geschlossene Kassette mit Spule, in die ein Materialband eingefädelt und anschließend eingespult werden soll, z.B. Tonbandkassetten, Videokassetten, Filmvorführkassetten oder insbesondere für Filmkassetten für Kleinbildfilme, da hier zusätzlich die Schwierigkeit besteht, daß das Einfädeln und Einspulen des Filmbandes bei völliger Dunkelheit erfolgen muß, um Belichtungen des Filmes zu vermeiden.

Ausführungsformen der Erfindung werden im folgenden anhand des Beispieles eines photographischen Kleinbildfilmes mit Zeichnungen näher erläutert. Es zeigen

Fig. 1     eine Kassette mit Spule und einen mit Befestigungsband befestigten Materialstreifen,

AG 1753

Fig. 2    eine Ausführungsform des Befestigungsbandes
mit einem vor dem Zusammenkleben schützenden
Material,

Fig. 3a    ein Befestigungsband im Schnitt,

      3b    ein Befestigungsband in perspektivischer
Darstellung mit umgelegtem Schutzmaterial,

Fig. 4    eine Spule mit zwei Klebebandstreifen im
Schnitt,

Fig. 5    eine Spule mit einem inaktiven Befestigungsband
oder einem Kunststoffstreifen im Schnitt,

Fig. 6a    einen Längsschnitt durch eine Kassette mit
Spule und angespritzter Lasche und befestigtem Materialstreifen,

      6b    einen Querschnitt durch eine Spule mit angespritzter Lasche und befestigtem Materialstreifen,

Fig. 7    eine Befestigungslasche nach Fig. 6 mit einer
druckknopfartigen Befestigungseinrichtung.

In Fig. 1 ist eine Kassette 1 für einen Kleinbildfilm 5 dargestellt. Um den Spulenholm 2 herum ist
ein Befestigungsband 3 gelegt und mit diesem durch
Kleben oder Schweißen fest verbunden. Die beiden
freien Enden des Befestigungsbandes 3 sind nach der

AG 1753

Umschlingung des Spulenholmes 2 in einem Bereich 6 auf sich selbst fest verbunden und durch die Öffnung der Kassette 1, das Patronenmaul, herausgeführt. Außerhalb des Patronenmaules ist ein Materialband, hier ein Filmstreifen 5, zwischen die beiden Enden des Bandes 3 geschoben und beidseitig mit diesen durch Kleben oder Verschweißen fest verbunden. Der so befestigte Filmstreifen 5 kann in Pfeilrichtung in die Kassette 1 eingespult werden. Um Abdrücke durch das etwas auftragende Befestigungsband 3 auf den Filmstreifen 5 zu vermeiden, ist der Spulenholm im Bereich des Befestigungsbandes mit einem geringeren Durchmesser versehen in den sich das Band 3 hineinlegt, während der Filmstreifen 5 mit seinen Rändern auf dem größeren Durchmesser des Spulenholmes 2 aufliegt.

Fig. 2 zeigt eine Ausführungsform des Befestigungsbandes 3, welches mit einem Haftkleber beschichtet ist und die klebende Seite des Bandes 3 mit einem vor dem Zusammenkleben schützenden Material 4, zum Beispiel mit einem siliconisierten Papier oder einer Folie bedeckt ist. Ein derartiges Haftklebeband 3,4 ist in Fig. 3a dargestellt. Im Anlieferungszustand besteht das Band aus einem Papier- oder Kunststoffstreifen 3 mit einer klebenden Schicht, die mit einer Folie 4 abgedeckt ist. In der Mitte ist die Folie 4 mit einem Schnitt 7 versehen, um die Folie nach beiden Seiten abziehen zu können. Für eine mehrmalige

AG 1753

Verwendung einer Kassette 1 mit Spule 2 und Befestigungsband 3,4 können an den beiden Rändern der Folie 4 weitere Einschnitte 8 vorgesehen werden, die gewährleisten, daß die äußersten Enden 9 des Befestigungsbandes 3,4 nicht kleben und der Befestigungsstreifen 3 von dem Filmband 5 wieder abgezogen werden kann. Zur Befestigung des Bandes 3,4 auf dem Spulenholm 2 wird die Schutzfolie 4 an dem mittleren Trennschnitt 7 von dem Band 3 abgelöst und nach beiden Seiten um 180° umgelegt (Fig. 3b). Das so vorbereitete Haftetikett 3 wird von der Bahn in der gewünschten Breite b abgetrennt und um den Spulenholm 2 geklebt, so daß noch ein Teil des Haftetikettes 3 in dem Bereich 6 (Fig. 2) aufeinandergeklebt ist. Die Spule 2 wird mit dem Befestigungsstreifen 3,4 in die Kassette 1 eingeführt, so daß sowohl die abgedeckten Klebeflächen und die Schutzfolienenden 4 aus der seitlichen Öffnung der Kassette 1 herausgeführt sind. Die Kassette 1 wird geschlossen und ist für die Befestigung eines Filmstreifens 5 bereit.

Die Befestigung des Filmstreifens 5 erfolgt nach Fig. 2, so, daß zunächst der Filmstreifen 5 zwischen die freien Enden des Klebebandstreifens 3 eingeschoben wird bis dieser an den Bereich 6 anstößt, an welchem das Klebeband 3 mit sich selbst verklebt ist (Pfeil bei 5). Unter Festhalten des Filmstreifens 5 werden die freien Schutzfolienenden 4 in Pfeilrichtung herausgezogen, so daß die restlichen Klebeflächen des Befestigungsbandes 3

AG 1753

frei werden und der Filmstreifen 5 mit diesen verklebt, wenn er durch das Kassettenmaul der Kassette 1 in Pfeilrichtung eingespult wird.

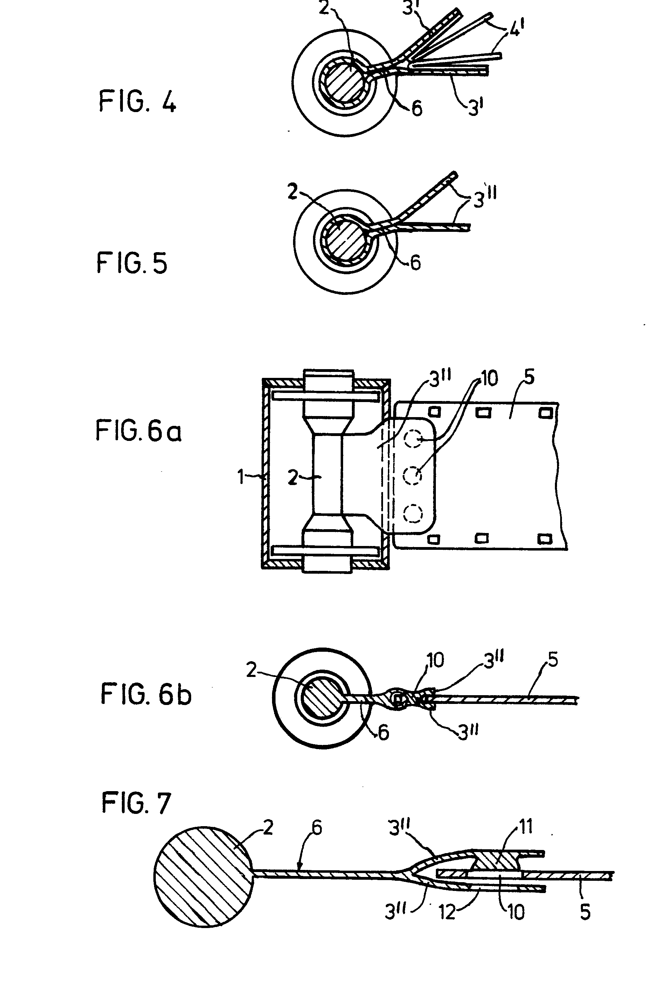

In Fig. 4 ist eine Ausführungsform dargestellt in welcher zwei Befestigungsbänder 3' mit Schutzfolien 4' an einen Spulenholm 2 und im Bereich 6 auf sich verklebt sind. Diese Ausführungsform ist von Vorteil, wenn spezielle Vorrichtungen verwendet werden, um die Bänder 3',4' auf den Spulenholm 2 aufzubringen.

Fig. 5 zeigt eine vorteilhafte Ausführungsform eines Befestigungsbandes, bei dem keine Schutzfol e 4,4' verwendet und abgezogen werden muß. Das Band 3" besteht aus einem Trägermaterial, wie Papier, Kunststoff, Textilien oder anderen Materialien und ist auf einer Seite mit einem unter Normalbedingungen nicht aktiven Kleber beschichtet, der erst bei Wärmeanwendung aktiviert und klebrig wird und beim Erkalten fest verklebt. Diese sogenannten Schmelzkleber oder Hotmelt-Kleber, aber auch siegelfähige Lacke, die hierzu verwendet werden können, sind seit langem bekannt. Bei der Montage der Kassette wird das Band 3" um den Spulenholm 2 und im Bereich 6 auf sich gepreßt und hierbei erhitzt. Nach der Abkühlung klebt das Band 3" fest auf dem Spulenholm und auf sich selbst, während die freien Enden nicht klebend bleiben. Die Spule wird in die Kassette 1 eingelegt, wobei die freien Enden aus der Kassette 1 durch das Kassettenmaul herausgeführt werden. Die Kas-

AG 1753

sette 1 wird dann verschlossen und ist für die Aufnahme eines Filmstreifens 5 bereit.

In ebenso vorteilhafter Weise kann das Band 3" ein Kunststoffstreifen sein, der mit Hitze oder besser mit Ultraschallenergie auf der Spule 2 und im Bereich 6 auf sich selbst angeschmolzen oder angeschweißt wird. Verschweißbare Kunststoffe sind z.B. Polystyrole, Polyester oder coextrudierte Polyester die mit gleichen oder ähnlichen Materialien durch Ultraschallenergie verschweißt werden können.

Die Kassette 1 wird dann wie beschrieben montiert, wobei die beiden Enden des Kunststoffstreifens 3" durch die Öffnung der Kassette herausgeführt sind. Im Dunklen wird dann der Filmstreifen 5 zwischen die Enden des Kunststoffstreifens 3" gebracht und mit Ultraschallenergie fest verschweißt und der Filmstreifen 5 in die Kassette 1 eingespult.

Fig 6 zeigt eine Weiterbildung, die ein gesondertes Anbringen eines Befestigungsbandes 3,3', 3" an die Spule überflüssig macht. Das Befestigungsband 3" ist bei dieser Ausführung bei der Herstellung der Spule aus Kunststoff in einem Spritzwerkzeug mit angespritzt. Der Spulenholm 2 ist im Bereich der angespritzten Lasche 3" in seinem Durchmesser reduziert, so daß sich die Lasche 3" beim Einwickeln des Filmstreifens 5 in die Vertiefung des Spulenholmes 2 legen kann.

AG 1753

Wie im Schnitt quer durch den Spulenholm 2 (Fig. 6b) dargestellt ist, ist die angepritzte Lasche 3" im Bereich 6 ein dünnes einfachliegendes Material, welches sich erst im Bereich der Kassettenöffnung oder außerhalb der Kassettenöffnung in zwei Laschen 3" aufspaltet, zwischen die der Filmstreifen 5 einschiebbar und mit den Laschen verschweißbar ist. Die Kassette 1 wird mit der Laschenspule 2 versehen und verschlossen. Es ist so möglich, beliebige und vor allem einfache Kassetten und Kassettenverschlüsse zu verwenden, da die Kassette 1 nicht mehr geöffnet werden muß, zum Beispiel Kunststoffkassetten aus einem Unterteil mit einem aufgeschweißten Deckel (Fig. 6a).

Besteht der Filmstreifen 5 aus einem Material, welches sich schlecht verkleben oder verschweißen läßt, ist es von Vorteil, wenn der Filmstreifen 5 in dem Bereich, in welchem er befestigt werden soll, mit Löchern 10 versehen ist, durch die die beiden Enden des Befestigungsbandes 3" auf sich selbst, durch die Löcher hindurch verklebt oder verschweißt werden. Fig. 6a zeigt eine Aufsicht auf das Filmstreifenende mit beispielsweise 3 Löchern 10 durch die das Befestigungsband 3" hindurch geklebt oder geschweißt ist.

In Fig. 6b ist eine Durchschweißung dargestellt, wobei die beiden Laschen 3" in dem Bereich des Loches 10 miteinander verschmolzen sind und einen sicheren unlösbaren Halt für den Filmstreifen 5 an der Spule 2 gewährleisten.

AG 1753

Es ist auch möglich die Laschen 3" nach Fig. 7 mit druckknopfartigen Vorsprüngen 11 und Löchern 12 zu versehen, wobei die Vorsprünge 11 durch die Löcher 10 des Filmstreifens 5 hindurchgreifen und in der anderen Lasche in eine Öffnung 12 einrasten, so daß der Filmstreifen 5 einerseits durch einfachen Druck auf die Laschen 3" und dem Einrasten des Vorsprunges 11 fest mit den Laschen 3" und somit mit der Spule 2 verbunden ist und andererseits auch durch einfaches Auseinanderziehen der Laschen 3" von den Laschen 3" lösbar ist, so daß ein nächster Filmstreifen 5 angebracht und in die Kassette eingespult werden kann.

AG 1753

Patentansprüche

1. Kassette mit Spule und einem Befestigungsband zur Befestigung eines Materialstreifens an der Spule, dadurch gekennzeichnet, daß das Band (3,3',3") auf oder an dem Holm der Spule (2) und in einem Bereich (6) ein Stück auf sich selbst befestigt ist und freie, nichtklebende Enden oder freie klebende und mit einem vor dem Zusammenkleben der Bänder schützenden Material (4,4') abgedeckte Enden besitzt und die freien Enden des Bandes (3,3',3") zur Aufnahme und Befestigung des Materialstreifens (5) zwischen den Bandenden (3,3',3") aus der Öffnung der Kassette (1) herausgeführt sind.

2. Kassette mit Spule und einem Band nach Anspruch 1, dadurch gekennzeichnet, daß das Band (3) ein Klebeband mit einem vor dem Zusammenkleben schützenden Material (4) ist und daß das Klebeband (3) um den Spulenholm (2) herum und ein Stück auf sich selbst verklebt ist, wobei das hierbei freiwerdende schützende Material (4) in der Mitte des Klebebandes (3) getrennt ist und von der Mitte (7) aus nach beiden Seiten um 180° umgefaltet ist und zum Abziehen des noch schützenden Materiales (4) an den Enden des Klebebandes (3) mit den Enden aus der Öffnung der Kassette (1) mit herausgeführt ist.

AG 1753

3. Kassette mit Spule und Band nach Anspruch 1, dadurch gekennzeichnet, daß als Befestigungsband (3) zwei Klebebänder (3') vorgesehen sind, die von zwei gegenüberliegenden Seiten an den Spulenholm (2) und ein Stück auf sich selbst geklebt sind und das vor dem Zusammenkleben schützende Material (4') um 180° umgefaltet und mit den Enden der Klebebänder (3') zum Abziehen des noch schützenden Materials (4') mit den beiden Enden aus der Öffnung der Kassette (1) herausgeführt sind.

4. Kassette mit Spule und Band nach Anspruch 1 bis 3, dadurch gekennzeichnet, daß zur mehrmaligen Verwendung der Kassette (1) mit verschiedenen Materialstreifen (5) an den Enden der Klebestreifen (3) Einschnitte (8) durch das schützende Material (4) parallel zur Spulenachse vorgesehen sind und die äußersten Enden der Klebestreifen (3) vor dem Verkleben mit dem Materialband (5) geschützt sind.

5. Kassette mit Spule und Band nach Anspruch 1, dadurch gekennzeichnet, daß das Band (3) ein Klebeband (3") ist und mit einem unter normalen Bedingungen inaktiven Kleber versehen ist und zum Kleben an dem Spulenholm (2), auf sich selbst und auf dem Materialstreifen (5) durch Hitze aktivierbar ist.

6. Kassette mit Spule und Band nach Anspruch 1, da-

AG 1753

durch gekennzeichnet, daß das Band (3) aus einem Material besteht oder mit einem Material beschichtet ist, welches mit der Spule (2), auf sich selbst und den beiden Seiten des Materialstreifens (5) mit Hitze oder Ultraschallenergie verschweißbar ist.

7. Kassette mit Spule und Band nach Anspruch 1, dadurch gekennzeichnet, daß das Band (3) im Bereich der Verklebung mit dem Spulenholm (2) und auf sich selbst ein Haftklebeband (3,3') ist und an seinen freien Enden mit einem inaktiven Kleber zum Hitzeverkleben oder mit einer Beschichtung versehen ist, die mit dem Materialstreifen (5) verschweißbar ist.

8. Kassette mit Spule und Band nach Anspruch 1, dadurch gekennzeichnet, daß der Spulenholm (2) in seinem mittleren Bereich einen geringeren Durchmesser besitzt und in diesem Bereich als Bänder zwei dünne flexible Laschen (3") angespritzt sind, die in ihrer Länge so bemessen sind, daß sie aus der Öffnung der Kassette (1) herausragen und nach dem Dazwischenschieben des Materialstreifens (5) mit diesem verschweißbar sind.

9. Kassette mit Spule und Band zur Befestigung eines Materialstreifens an der Spule nach einem der Ansprüche 1 bis 8, dadurch gekennzeichnet, daß an den Bandenden des Befestigungsbandes (3) zu befestigende Materialstreifen (5) an seinem Ende mit Löchern

AG 1753

(10) versehen ist, durch die die Bandenden (3,3', 3") hindurch miteinander verklebbar oder verschweißbar sind.

10. Kassette mit Spule und Band nach Anspruch 8 und 9, dadurch gekennzeichnet, daß die flexiblen Laschenenden 3" mit druckknopfartigen Verschlüssen (11,12) versehen sind, wobei die vorspringenden Teile (11) an der einen Lasche 3" so ausgebildet sind, daß sie durch Löcher (10) im Materialband (5) durchgreifen und in Löchern (12) der anderen Lasche 3" einrastbar sind.

AG 1753

0053312

1/2

FIG. 1

FIG. 2

FIG. 3a

FIG. 3b

FIG. 4

FIG. 5

FIG. 6a

FIG. 6b

FIG. 7

| Europäisches Patentamt | EUROPÄISCHER RECHERCHENBERICHT | 0053312 |
|---|---|---|

Nummer der Anmeldung

EP 81109687.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | AT - B - 261 398 (KODAK) <br> * Gesamt * | 1,2,7 |
| | DE - B2 - 2 144 929 (FUJI PHOTO FILM) <br> * Gesamt * | 1,8 |
| | GB - A - 789 384 (KODAK) <br> * Fig. 5; Seite 3 * | 1,5,6,7,9 |
| | GB - A - 685 241 (KODAK) <br> * Gesamt * | 1,2,5,7,8 |
| D | US - A - 2 951 656 (WELLMAN) <br> * Gesamt * | 1,2,5 |
| | DE - A1 - 2 615 310 (AGFA) <br> * Gesamt * | 1,2,3,4,5,9 |

**KLASSIFIKATION DER ANMELDUNG (Int. Cl.)**

G 03 B 17/26

**RECHERCHIERTE SACHGEBIETE (Int. Cl.)**

G 03 B 17/00
G 03 C 3/00
G 11 B 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 15-02-1982 | KRAL |

EPA form 1503.1 06.78